# EUROPÄISCHE PATENTSCHRIFT

(11) **EP 1 704 001 B1**
(45) Veröffentlichungstag und Bekanntmachung des Hinweises auf die Patenterteilung: **22.08.2007**
(21) Anmeldenummer: 04820593.4
(22) Anmeldetag: 17.11.2004
(51) Int. Cl.: B21C 37/15, F01N 7/08, F16L 9/18, B21D 9/15

(54) **GEBOGENES DOPPELWANDIGES BAUTEIL, WIE Z.B. EIN LUFTSPALTISOLIERTES ABGASROHR, UND VERFAHREN ZU DESSEN HERSTELLUNG**
BENT DOUBLE-WALLED COMPONENT, SUCH AS AN EXHAUST PIPE INSULATED BY AN AIR GAP, AND METHOD FOR PRODUCING THE SAME
COMPOSANT CINTRE A DEUX PAROIS, PAR EXEMPLE TUYAU POUR GAZ D'ECHAPPEMENT ISOLE PAR LAME D'AIR, ET SON PROCEDE DE PRODUCTION

(30) Priorität: 09.12.2003 DE 10357344
(43) Veröffentlichungstag der Anmeldung: 27.09.2006
(73) Patentinhaber: DaimlerChrysler AG, 70327 Stuttgart (DE)
(72) Erfinder: DUDZIAK, Kai-Uwe, 21435 Stelle (DE); GADE, Jürgen, 21614 Buxtehude (DE)
(86) Internationale Anmeldenummer: PCT/EP2004/013013
(87) Internationale Veröffentlichungsnummer: WO 2005/061142

(56) Entgegenhaltungen:
- EP-A- 0 503 580
- DE-A1- 4 437 380
- DE-A1- 10 201 594
- DE-A1- 19 704 645
- US-A- 3 343 250

## Beschreibung

Die Erfindung betrifft ein gebogenes doppelwandiges Bauteil, wie z.B. ein luftspaltisoliertes Abgasrohr, und ein Verfahren zu dessen Herstellung.

In Abgasanlagen von modernen Verbrennungskraftmaschinen, die mit einem Katalysator ausgerüstet sind, kommen vermehrt doppelwandige Rohre zum Einsatz, die über ein Außenrohr und ein Innenrohr verfügen, wobei zwischen dem Außenrohr und dem Innenrohr ein isolierender Luftspalt ausgebildet ist. Bei solchen Rohren handelt es sich um sogenannte luftspaltisolierte (LSI-) Rohre. Der Luftspalt zwischen dem Außenrohr und dem Innenrohr wirkt sich vorteilhaft als Wärmeisolierung aus, was aufgrund des schlechten Wärmeübergangs vom Innenrohr an die Außenumgebung die Abgasanlage und den damit verbundenen Katalysator schnell auf seine Betriebstemperatur bringt.

Im Zusammenhang mit einer möglichst kompakten Anordnung von Aggregaten, z.B. in dem Motorraum eines Kraftfahrzeugs, wird im allgemeinen angestrebt, die voranstehend genannten doppelwandigen Rohre gebogen auszuführen, so dass ein platzsparender Einbau im Bereich des Motorraums erzielt werden kann. Ohne zusätzliche Hilfsmittel ist es derzeit nicht ohne weiteres möglich, ein LSI-Rohr zu biegen. Die Schwierigkeit besteht in der Beibehaltung des geforderten Spaltmaßes zwischen den Rohrwänden. Die Rohrwände dürfen sich nach dem Biegen nicht berühren bzw. das Spaltmaß zwischen dem Innenrohr und dem Außenrohr darf sich nicht gravierend, wie bspw. durch Rohreinfall und dergleichen, verändern.

Bei bekannten Biegeverfahren wird diesem Erfordernis durch ein Einbringen von Zusatzwerkstoffen in loser Form gerecht, die zwischen Innen- und Außenrohr eingefüllt werden. Hierbei können beispielsweise die Materialien Sand, Stahlkugeln, niedrigschmelzende Legierungen, Eis und dergleichen verwendet werden. Die diesbezüglichen Nachteile bestehen einerseits in dem Aufwand, z.B. die Energiezufuhr zum Aufschmelzen von Eis, um die eingefüllten Medien nach dem Umformen des LSI-Rohrs wieder aus dem Spalt zu entfernen. Andererseits besteht ein Nachteil in der übermäßigen Verschmutzung des Arbeitsumfeldes durch die austretenden Medien. Insbesondere bei auf dem Boden herumliegenden Stahlkugeln besteht für Personen ein erhebliches Gefährdungspotential durch ein Ausgleiten auf den Kugeln. Ein weiterer Nachteil besteht darin, dass Reste des Zusatzwerkstoffes (insbesondere Stahlkugeln) in dem gebogenen Rohr verbleiben und im späteren Betrieb somit Störungen von Aggregaten wie z.B. des Katalysators oder eines Turboladers verursachen können. Ebenso kann es zu unerwünschten Geräuschemissionen durch verbleibende Restmedien kommen.

Die Druckschrift DE 102 01 594 A1 beschreibt ein Verfahren zum Herstellen eines gebogenen doppelwandigen LSI-Rohrs. Bei diesem Rohr ist der Spalt zwischen dem Innenrohr und dem Außenrohr vollständig durch eine Distanzschicht ausgefüllt. Besteht die Distanzschicht aus einem Kunststoff oder aus einer niedrigschmelzenden Legierung, so wird das Entfernen der Distanzschicht durch Verbrennen oder Herausschmelzen erzielt. Ein nach dem Verfahren dieser Druckschrift hergestelltes LSI-Rohr unterliegt jedoch dem Nachteil, dass der Spalt zwischen dem Innenrohr und dem Außenrohr vollständig durch die Distanzschicht ausgefüllt ist und entsprechend eine große Materialmenge nach der Bauteilherstellung zu entfernen ist.

In der Druckschrift DE 44 37 380 A1 sind ein luftspaltisoliertes Abgasrohr und ein Verfahren zu seiner Herstellung beschrieben. Dieses luftspaltisolierte Abgasrohr weist zwei über einen Schiebesitz verbundene Innenrohrabschnitte auf. Bei der Herstellung dieses Abgasrohrs wird ein Innenrohr in ein Außenrohr eingesteckt, wobei ein Raum zwischen dem Innenrohr und dem Außenrohr mit einem im Wesentlichen inkompressiblen Material, vorzugsweise Stahlsand, gefüllt wird. Diese Anordnung wird sodann gebogen. Nach dem Biegen wird das inkompressible Material aus dem Raum entfernt. Außerdem ist zwischen dem Innenrohr und dem Außenrohr eine Radiallagerung vorgesehen. Diese Radiallagerung besteht aus drei umfangmäßig verteilten, voneinander beabstandeten Drahtgestrickelementen, die auch als umlaufende Drahtgestrickringe ausgebildet sein können.

Die Druckschrift US 3 343 250 betrifft ein Verfahren zur Herstellung eines doppelwandigen Rohrs gemäß dem Oberbegriff des Anspruchs 1 bzw. ein Bauteil gemäß dem Oberbegriff des Anspruchs 13 im Verfahren ist vorgesehen, ein inneres Rohr bspw. koaxial zu einem äußeren Rohr anzuordnen und in einem Hohlraum zwischen diesen beiden Rohren Abstandshalter anzuordnen. Des Weiteren wird in dem Hohlraum zwischen diesen beiden Rohren ein Füllmaterial, vorzugsweise Polyethylenglykol, das einen niedrigen Schmelzpunkt aufweist, in einem kristallinen bzw. festen Zustand eingefüllt. Danach erfolgt ein Biegen des herzustellenden Rohrs. Nachfolgend wird das Füllmaterial mit heißem Wasser geschmolzen, ausgewaschen und somit aus dem Hohlraum entfernt. Es ist vorgesehen, dass die Abstandshalter in ihrer ursprünglichen Position belassen werden, somit dienen sie dem Zweck, eine Struktur des Rohrs beizubehalten, so dass die beiden Rohre nach Entfernen des Füllmaterials einander nicht berühren können.

Der Erfindung liegt die Aufgabe zugrunde, ein gebogenes doppelwandiges Bauteil und ein Verfahren zu dessen Herstellung zu schaffen, bei dem die Positionierung eines Zwischenstücks in dem Rohrverbund gebildet aus dem Innenrohr und dem Außenrohr einen geringen Aufwand erfordert und das Entfernen des Zwischenstücks ohne weiteres möglich ist.

Erfindungsgemäß wird die Aufgabe durch ein Verfahren mit den Merkmalen des Anspruchs 1, und des Weiteren durch ein Bauteil mit den Merkmalen des Anspruchs 13 gelöst. Vorteilhafte Weiterbildungen der Erfindung sind Gegenstand der abhängigen Ansprüche.

Durch das erfindungsgemäße Verfahren kann ein gebogenes doppelwandiges Bauteil hergestellt werden, bei dem ein Zwischenstück nur einen Teil eines Zwischenraums, der zwischen dem inneren Rohr und dem äußeren Rohr vorgesehen ist, in axialer Richtung des Bauteils ausfüllt. Die Dicke des Zwischenstücks ist hierbei im Wesentlichen auf den Abstand abgestimmt, der zwischen einer Außenfläche des inneren Rohrs und einer Innenfläche des äußeren Rohrs besteht. Zweckmäßigerweise wird das Zwischenstück lediglich an einer Stelle des Zwischenraums des Bauteils dort positioniert, wo es für das Biegen des Verbunds gebildet aus dem inneren Rohr und dem äußeren Rohr erforderlich ist, um einen Rohreinfall und dergleichen zu verhindern. Anders ausgedrückt, ist die Ausbildung von Einfallstellen, Einknickungen und dergleichen beim Biegen des Verbunds an der Stelle verhindert, wo sich zwischen dem Innenrohr und dem Außenrohr das Zwischenstück befindet. Das Zwischenstück gewährleistet somit während der Biegung des Bauteils bzw. des gesamten Rohrverbunds eine ausreichende Abstützung der Innenfläche des äußeren Rohrs gegen die Außenfläche des inneren Rohrs, so dass das Spaltmaß bzw. der Abstand zwischen dem inneren Rohr und dem äußeren Rohr im wesentlichen konstant bleibt.

Ein wesentliches Merkmal besteht darin, dass das Zwischenstück den Zwischenraum zwischen dem inneren Rohr und dem äußeren Rohr nicht vollständig ausfüllt. Dies kann in einer vorteilhaften Ausführungsform dadurch geschehen, dass das Zwischenstück in Form eines Rings ausgebildet ist, der vor dem Biegen des Verbunds entweder auf das innere Rohr aufgebracht oder in das äußere Rohr eingebracht wird. Falls das Bauteil in axialer Richtung mehrere Krümmungen aufweist, werden bei dem erfindungsgemäßen Verfahren vorteilhaft eine Mehrzahl von Zwischenstücken in Form von Ringen entlang einer Längsachse des Bauteils angeordnet, so dass jeweils ein Ring an einer entsprechenden Biegestelle positioniert ist, um dort einen Rohreinfall zu verhindern. Die gleiche vorteilhafte Wirkung läßt sich durch ein Zwischenstück erzielen, dass in Form einer Spirale ausgebildet ist, die sich entlang einer Längsachse des Bauteils erstreckt. Eine solche Spirale bietet gegenüber einer Mehrzahl von Ringen den Vorteil einer weiter vereinfachten Handhabung und einer entsprechend verkürzten Montagezeit.

Das Bereitstellen eines Zwischenstücks, z.B. in Form eines einzelnen Rings oder einer Spirale, bietet darüber hinaus den Vorteil, dass nach der Inbetriebnahme einer Verbrennungskraftmaschine, bei der das doppelwandige Bauteil eingesetzt wird, infolge der hohen Abgastemperaturen und der dadurch bedingten thermischen Zersetzung des Zwischenstücks lediglich eine geringe Gasmenge aus dem Zwischenraum entweichen muß. Somit ergibt sich eine lediglich geringe bis gar keine "Anreicherung" des in dem inneren Rohr geführten Abgasstroms der Verbrennungskraftmaschine durch die Gasmenge, die durch das Verbrennen des Zwischenstücks entsteht.

Gemäß einer vorteilhaften alternativen Ausführungsform kann das Zwischenstück auch aus einer Beschichtung eines bereits gefertigten inneren Rohrs gebildet sein. Dies bietet gegenüber einer Montage eines separaten Rings oder einer separaten Spirale im Hinblick auf ein kontinuierliches Fertigungsverfahren signifikante Vorteile in Form eines weiter verminderten Montageaufwands.

Erfindungsgemäß ist das Zwischenstück aus einem Kunststoff hergestellt , der bei seiner Verbrennung im wesentlichen nur in niedermolekulare Spaltprodukte überführt wird. Hierzu eignet sich insbesondere ein Kunststoff aus Polyethylen, für den eine rückstandsfreie Verbrennung in Folge der hohen Abgastemperatur gewährleistet ist. Eine Schädigung z.B. des Katalysators, durch den der Abgasstrom ausschließlich gegleitet wird, tritt somit nicht durch Rückstände des verbrannten Zwischenstücks ein. In gleicher Weise sind für das Zwischenstück auch andere Kunststoffe geeignet, die bei ihrer thermischen Zersetzung bzw. Verbrennung ausschließlich in wiederverwendbare Spaltprodukte überführt werden, wodurch eine Schädigung des Katalysators oder dergleichen ausgeschlossen ist.

Bei einem sogenannten LSI-Rohr ist im allgemeinen das äußere Rohr abgasdicht ausgeführt. In vorteilhafter Weiterbildung der Erfindung ist das innere Rohr mittels eines Schiebesitzes mit einem daran angrenzenden Teil der Abgasanlage verbunden. Ein solcher Schiebesitz gewährleistet einerseits einen Ausgleich von thermischen Spannungen, die aufgrund der sehr starken Temperaturunterschiede im Betrieb der Verbrennungskraftmaschine im Vergleich zum Ruhezustand auftreten. Andererseits kann das durch die Verbrennung des Zwischenstücks infolge der Abgastemperatur von einigen hundert Grad Celsius gebildete Gas ohne weiteres durch den Schiebesitz hindurch von dem Zwischenraum in das innere Rohr hinein gelangen, um hiernach zusammen mit dem regulären Abgasstrom z. B. durch den Katalysator hindurch nach außen abgegeben zu werden. Durch die rückstandsfreie Verbrennung des Zwischenstücks wird somit der gewünschte vollständige Luftspalt zwischen dem inneren Rohr und dem äußeren Rohr geschaffen, der im weiteren Betrieb der Verbrennungskraftmaschine die erforderliche Wärmeisolierung für das doppelwandige Bauteil gewährleistet.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung, wie in den Ansprüchen definiert, zu verlassen.

Die Erfindung ist nachstehend anhand einer nur beispielhaft zu verstehenden Ausführungsform in der Zeichnung schematisch dargestellt und wird im folgenden unter Bezugnahme auf die Zeichnung näher erläutert.
- Figur 1: zeigt ein erfindungsgemäßes doppelwandiges Rohr in einem gebogenen Zustand.
- Figur 2: zeigt verschiedene Ausführungsformen eines Rohrendes im Bereich A von Figur 1.
- Figur 3: zeigt ein erfindungsgemäßes doppelwandiges Rohr mit einem Zwischenstück in einem nicht gebogenen Zustand.
- Figur 4: zeigt das Rohr von Figur 3 in einem gebogenen Zustand.
- Figur 5: zeigt ein erfindungsgemäßes doppelwandiges Rohr mit einem alternativen Zwischenstück in einem nicht gebogenen Zustand.
- Figur 6: zeigt das Rohr von Figur 5 in einem gebogenen Zustand.
- Figur 7: zeigt das erfindungsgemäße doppelwandige Rohr in einem Zustand, in dem es mittels eines Schiebesitzes in einer Abgasanlage montiert ist.

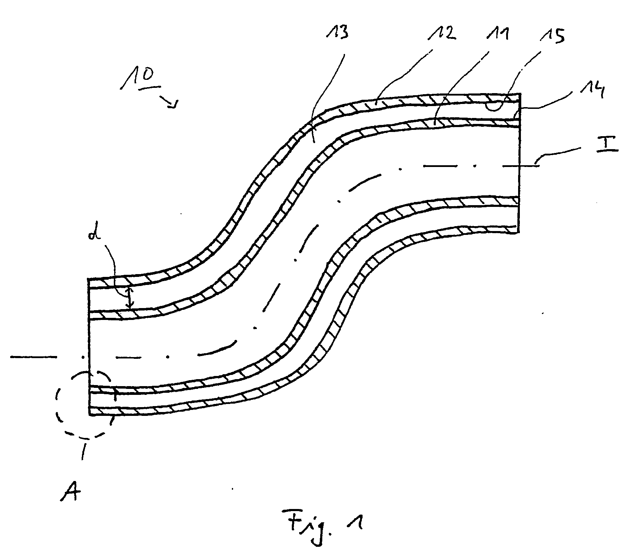

Figur 1 zeigt eine seitliche Querschnittsansicht einer Ausführungsform eines erfindungsgemäßen doppelwandigen Rohrs 10 in einem gebogenen Zustand. Das Rohr 10 weist im einzelnen ein inneres Rohr 11 und ein äußeres Rohr 12 auf, die zueinander koaxial angeordnet sind. Der Außendurchmesser des inneren Rohrs 11 ist entlang der gesamten axialen Erstreckung I des Rohrs 10 im wesentlichen gleichmäßig kleiner als der Innendurchmesser des äußeren Rohrs 12 gewählt, so dass zwischen dem inneren Rohr 11 und dem äußeren Rohr 12 ein Zwischenraum 13 ausgebildet ist. Hierbei ist eine Außenfläche 14 des inneren Rohrs 11 im wesentlichen gleichmäßig um einen Abstand d von einer Innenfläche 15 des äußeren Rohrs 12 beabstandet.

Der in Figur 1 gezeigte gebogene Zustand des Rohrs 10 wird zweckmäßigerweise mittels eines (in Figur 1 nicht gezeigten) Zwischenstücks erzielt, das vor einem entsprechenden Biegen bzw. Umformen des Rohrs 10 in den Zwischenraum 13 eingebracht wird. Ein solches Zwischenstück kann vorteilhaft aus einem thermoplastischen Kunststoff, wie z.B. Polyethylen, hergestellt sein. Wenn das Rohr 10 nach seiner Fertigstellung in einer Abgasanlage einer Verbrennungskraftmaschine montiert ist, so verbrennt das Kunststoff-Zwischenstück unter Einwirkung der hohen Abgastemperatur, die üblicherweise einen Wert von einigen 100°C annimmt, rückstandsfrei. Im Ergebnis wird durch das Verbrennen des Zwischenstücks in dem Zwischenraum 13 ein durchgehender Luftspalt erzeugt, wodurch sich die gewünschte Wärmeisolierung des inneren Rohrs 11 einstellt. Das in Figur 1 gezeigte Rohr 10 ist in einem Zustand gezeigt, in dem das Zwischenstück bereits rückstandsfrei verbrannt ist.

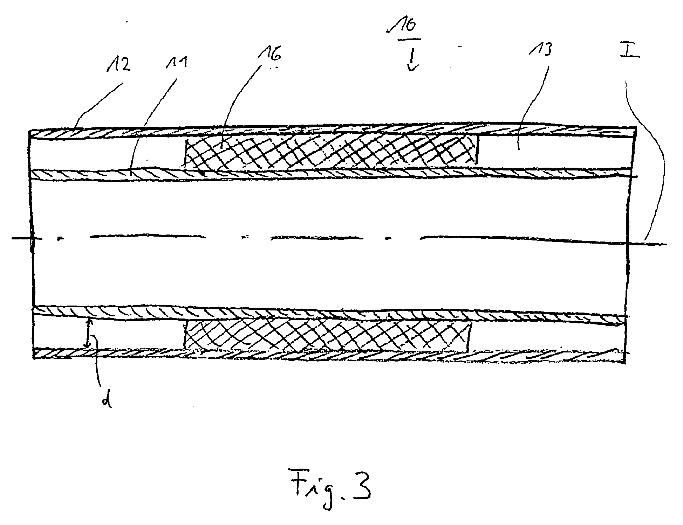

Nachstehend wird unter Bezugnahme auf die Figuren 3 bis 6 im einzelnen erläutert, wie das Rohr 10 mittels des Zwischenstücks in seinen gebogenen Zustand gebracht wird.

Zunächst werden das innere Rohr 11 und das äußere Rohr 12 vorzugsweise in gerader Form bereitgestellt. Ein Zwischenstück 16 in Form eines Kunststoffrings wird anschließend entweder auf die Außenfläche 14 des inneren Rohrs 11 aufgebracht oder aber in die Innenfläche 15 des äußeren Rohrs 12 eingebracht. Um ein unerwünschtes Verrutschen des Kunststoffrings 16 im weiteren Fertigungsablauf zu verhindern, weist der Ring in Bezug zu der Außenfläche 14 des inneren Rohrs 11 bzw. zu der Innenfläche 15 des äußeren Rohrs 12 vorzugsweise ein Paßmaß auf.

In einem nächsten Schritt werden das innere Rohr 11 und das äußere Rohr 12 zu einem Verbund zusammengebracht, wobei nun das innere Rohr 11 und das äußere Rohr 12 durch den Ring 16 in einem definierten Abstand d voneinander beabstandet sind. Die Dicke des Rings 16 ist geeignet auf die jeweiligen Abmessungen des inneren Rohrs 11 und des äußeren Rohrs 12 abgestimmt, so dass die beiden Rohre ohne weiteres zusammen-gebracht werden können, ohne dabei miteinander zu verklemmen oder dergleichen.

Der Ring 16 ist vorzugsweise aus einem thermoplastischen Kunststoff, wie z.B. Polyethylen hergestellt, was sich zunächst in günstigen Herstellungskosten niederschlägt. Der Ring 16 ist in den Zwischenraum 13 zwischen dem inneren Rohr 11 und dem äußeren Rohr 12 an einer Stelle eingebracht, an der das noch gerade Rohr 10 anschließend einer Biegung bzw. Umformung unterzogen wird. Die Materialbeschaffenheit des Rings 16 aus einem Kunststoff gewährleistet im Hinblick auf die Biegung des Rohrs 10, dass der Ring 16 aufgrund seiner Elastizität der Verformung keinen übermäßigen Widerstand entgegensetzt. Des weiteren ist der Zwischenring 16 so formstabil, dass er den einwirkenden Kräften nicht ausweicht und sich entsprechend nicht massiv verformt.

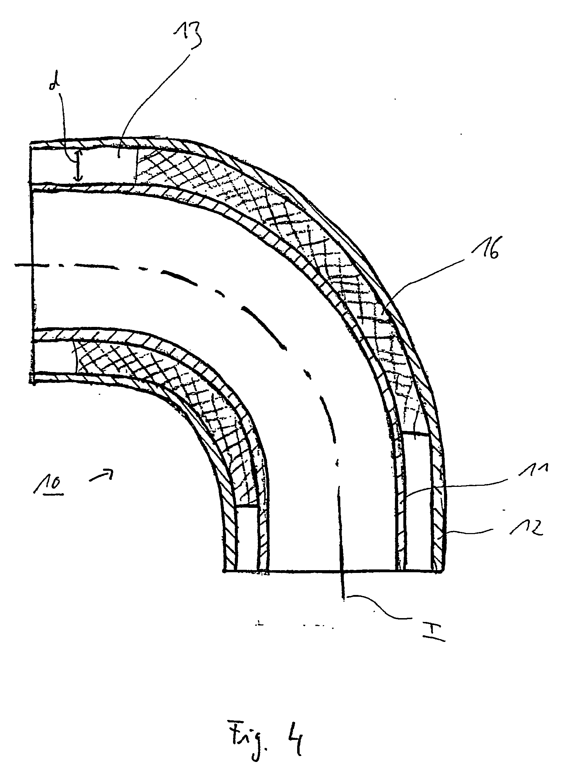

Der Verbund, der aus dem Zusammenfügen des inneren Rohrs 11 und des äußeren Rohrs 12 gebildet ist, läßt sich beispielsweise durch ein herkömmliches CNC-Biegen mit geeigneten Dornhalterungen und dergleichen in den gebogenen Zustand überführen, der in Figur 4 in einer seitlichen Querschnittsansicht gezeigt ist. Der Zwischenring 16 verbleibt während der Biegung des Rohrs 10 in bezug auf seine Dicke formstabil, so dass das innere Rohr 11 auch in dem Abschnitt des Rohrs 10, der nun gebogen ist, von dem äußeren Rohr 12 um den Abstand d ungefähr gleichmäßig beabstandet bleibt. Im Verlauf des Biegevorgangs sind die Innenfläche 15 des äußeren Rohrs 12 in bezug zu der Außenfläche 14 des inneren Rohrs 11 durch den Ring 16 zuverlässig abgestützt. Somit trägt der Zwischenring 16 dazu bei, dass das geforderte Spaltmaß d in dem Rohr 10 auch in seinem gebogenen Abschnitt beibehalten wird. Im Verlauf der Biegung des Rohrs 10 verhindert der Zwischenring 16 einen unzulässig hohen Rohreinfall, Einknickungen und dergleichen, wodurch sonst ein konstantes Spaltmaß zwischen dem inneren Rohr 11 und dem äußeren Rohr 12 nicht länger gewährleistet wäre.

Falls das Rohr 10 in seinem Endzustand an mehreren Stellen einen gebogenen Abschnitt aufweist, so wird vor dem Biegen des Rohrs 10 eine Mehrzahl von Zwischenringen 16 bereitgestellt. Im einzelnen wird ein jeweiliger Zwischenring 16 in jedem Abschnitt des Rohrs 10 bzw. des Zwischenraums 13 angeordnet, der anschließend einer Biegung unterzogen wird. Hierdurch ist in effizienter und einfacher Weise gewährleistet, dass in den Abschnitten des Rohrs 10, die gebogen werden, infolge des darin positionierten Zwischenrings 16 kein unzulässig hoher Rohreinfall und dergleichen auftritt.

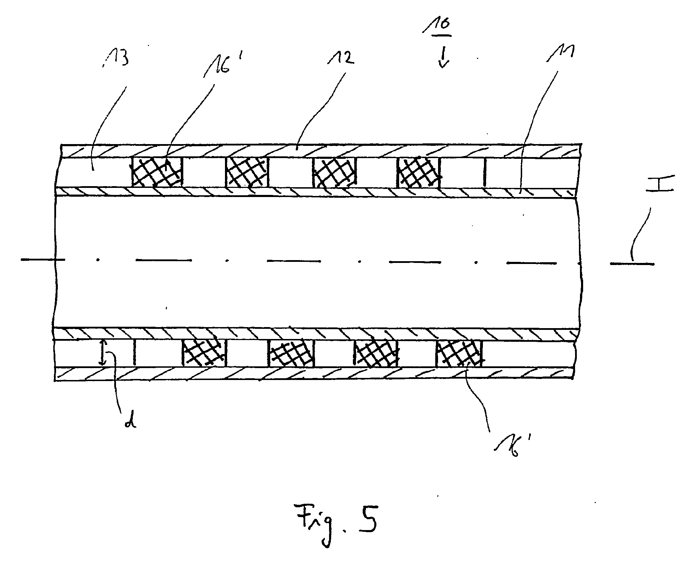

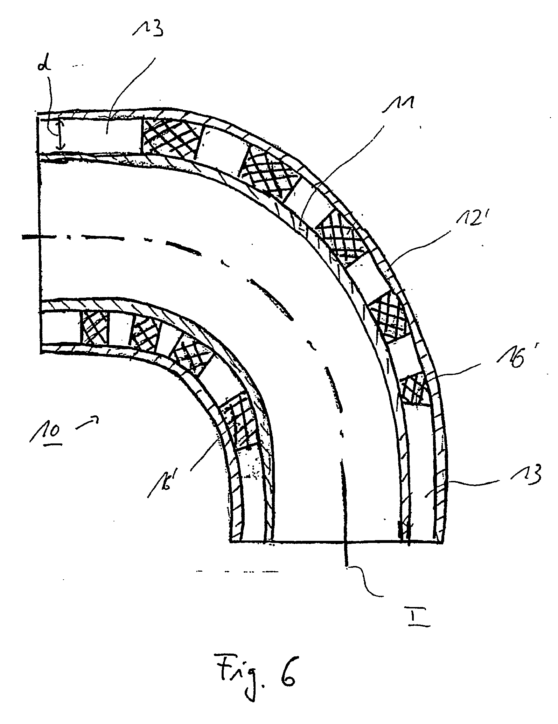

Anstelle eines einzelnen Zwischenrings 16 oder einer Mehrzahl von Ringen, kann das Zwischenstück alternativ in Form einer Spirale 16' ausgebildet sein. In Figur 5 ist das Rohr 10 in einer seitlichen Querschnittsansicht gezeigt, bei der in den Zwischenraum 13 ein Zwischenstück in Form einer Spirale eingebracht ist. Die Spirale 16' eignet sich insbesondere für den Fall, dass sich der gebogene Abschnitt des Rohrs 10 über einen längeren Bereich in axialer Richtung des Rohrs 10 erstreckt. Somit läßt sich auch hierbei ein Rohreinfall oder dergleichen zuverlässig verhindern. Des weiteren zeichnet sich die Spirale 16' gegenüber einer Mehrzahl von einzelnen Ringen durch eine wesentlich vereinfachte Handhabung aus, was eine verkürzte Montagezeit und damit eine Kostensenkung zur Folge hat. In Figur 6 ist das Rohr 10 von Figur 5 in einem gebogenen Zustand gezeigt. Wie voranstehend bereits erläutert, ist in dem gebogenen Abschnitt des Rohrs 10 infolge der Spirale 16' ein konstanter Abstand d zwischen dem inneren Rohr 11 und dem äußeren Rohr 12 gewährleistet.

Alternativ zum Bereitstellen des Zwischenstücks in Form eines Rings oder einer Spirale kann das innere Rohr 11 auch in dem Abschnitt, in dem das herzustellende Rohr 10 letztlich gebogen wird, mit einer Beschichtung versehen werden, deren Dicke im wesentlichen dem gewünschten Abstand d zwischen dem inneren Rohr 11 und dem äußeren Rohr 12 entspricht. Zweckmäßigerweise besteht auch diese Beschichtung aus einem Kunststoff, was aufgrund der Elastizität dieses Materials eine Verformung in dem gebogenen Abschnitt ohne weiteres ermöglicht.

Ein wesentlicher Vorteil der Erfindung besteht darin, dass das gebogene Rohr 10 zum Entfernen des Zwischenstücks keiner weiteren Behandlung bedarf. Für den Fall, dass das Rohr in einer Abgasanlage oder dergleichen einer Verbrennungskraftmaschine verwendet wird, bewirkt die hohe Abgastemperatur und die sich entsprechend einstellende Erwärmung des Rohrs 10, insbesondere des inneren Rohrs 11, in dem das Abgas geführt wird, eine Verbrennung des Zwischenstücks, falls dieses aus einem Kunststoff hergestellt ist. Im Hinblick auf eine nicht erwünschte Schädigung eines in der Abgasanlage angeordneten Aggregats, wie z.B. ein Katalysator, ein Turbolader oder dergleichen, ist es von wesentlicher Bedeutung, dass das Zwischenstück rückstandsfrei verbrennt. Ein geeigneter Kunststoff, der dieses Erfordernis erfüllt, ist z.B. durch ein Polyethylen gegeben. Des weiteren kann das Zwischenstück auch durch andere Kunststoffe gebildet sein, die in gleicher Weise eine rückstandsfreie Verbrennung gewährleisten.

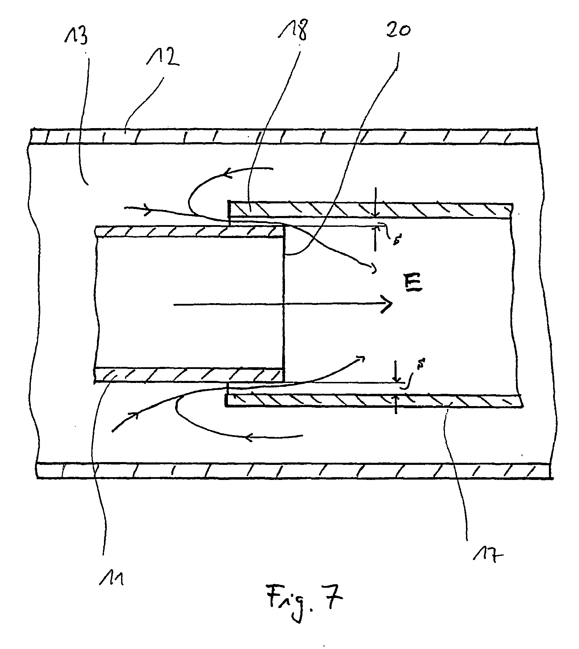

Nachstehend ist unter Bezugnahme auf Figur 7 erläutert, wie die Gase, die durch die Verbrennung des Zwischenstücks 16, 16' entstehen, aus dem Zwischenraum 13 entweichen.

Im allgemeinen ist eine Abgasanlage einer Verbrennungskraftmaschine erheblichen Temperaturschwankungen unterworfen, die eine thermische Ausdehnung der einzelnen Bauteile der Abgasanlage zur Folge haben. Zum Ausgleich dieser Temperaturschwankungen und der dadurch entstehenden thermischen Spannungen ist es bekannt, aneinander angrenzende Bauteile bzw. Rohre der Abgasanlage mittels eines sogenannten Schiebesitzes miteinander zu verbinden. Bei einem solchen Schiebesitz ist ein Rohr lediglich in ein anderes Rohr hineingesteckt, so dass thermische Spannungen durch eine Gleitbewegung des einen Rohrs relativ zu dem anderen Rohr kompensiert werden können.

Figur 7 zeigt eine seitliche Querschnittsansicht eines Teils einer Abgasanlage. Hierbei ist ein Endabschnitt des inneren Rohrs 11 mittels eines Schiebesitzes 18 an einem daran angrenzenden Rohr 17 montiert. Nachstehend ist dieser Schiebesitz 18 im einzelnen erläutert.

Ein Abgasstrom, der von einer Verbrennungskraftmaschine oder dergleichen erzeugt wird, wird vollständig in dem inneren Rohr 11 geführt. Im allgemeinen ist es bei dem doppelwandigen Rohr 12 von großer Bedeutung, dass das äußere Rohr 12 absolut gasdicht ausgeführt ist, um eine Abgasentweichung in die Atmosphäre oder unzulässige Geräuschemissionen oder dergleichen zu verhindern. In der in Figur 7 gezeigten Darstellung verläuft die Strömungsrichtung, in der das Abgas in dem inneren Rohr 11 geführt wird, von links nach rechts und ist entsprechend durch einen Pfeil E angedeutet. Das innere Rohr 11 ist an seinem Ende 20 in das daran angrenzende weitere Rohr 17 hineingesteckt. Das Rohr 17 ist in seinem Durchmesser geringfügig größer als das innere Rohr 11 ausgeführt und umfaßt somit den Endabschnitt 20 des inneren Rohrs 11. Die Abmessungen des inneren Rohrs 11 und des Rohrs 17 sind hierbei geeignet so gewählt, dass in dem Bereich, in dem sich die jeweiligen Endabschnitte der Rohre überlappen, ein kleiner Spalt s ausgebildet ist. Im Betrieb der Verbrennungskraftmaschine bewirkt die Strömungsrichtung E, dass sich infolge eines so genannten "Mitreißeffektes" eine Sogwirkung von dem Zwischenraum durch den Spalt s hindurch in den Innenraum des Rohrs 17 hinein einstellt. Anders ausgedrückt, werden Luftpartikel durch die erläuterte Sogwirkung aus dem Zwischenraum 13 heraus durch den Spalt s hindurch in das Rohr 17 hineingesaugt und mit dem übrigen Abgasstrom in der Figur 7 weiter nach rechts transportiert, z.B. in Richtung eines Katalysators oder dergleichen.

Durch die voranstehend erläuterte Sogwirkung an dem Endabschnitt 20 des inneren Rohrs 11 ist gewährleistet, dass ein Gas, das infolge der Verbrennung des Zwischenstücks 16, 16' in dem Zwischenraum 13 entsteht, geeignet durch den Spalt s, der bei dem Schiebesitz 18 ausgebildet ist, entweichen kann, so dass dieses Gas zusammen mit dem übrigen Abgasstrom abtransportiert wird. Demnach wird durch den Betrieb der Verbrennungskraftmaschine infolge der hohen Abgastemperaturen ein Verbrennen des Zwischenstücks 16, 16' bewirkt, ohne dass z.B. eine zusätzliche Energiezufuhr zum Aufschmelzen des Zwischenstücks oder ähnliche gesonderte Maßnahmen vonnöten wären.

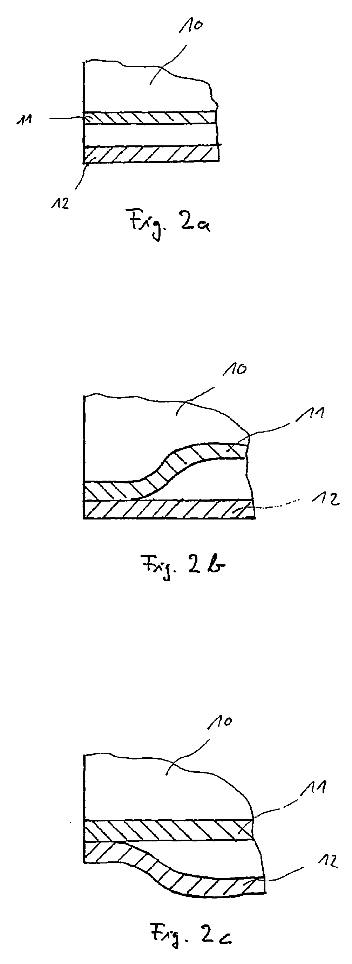

Unter Bezugnahme auf Figur 2 sind verschiedene Ausführungsformen erläutert, in denen das Rohr 10 an seinem jeweiligen Endabschnitt ausgebildet sein kann. In den Figuren 2a bis 2c sind mögliche Anordnungen des in der Figur 1 mit A gezeigten Endabschnitts des Rohrs 10 im einzelnen erläutert.

Gemäß der Ausführungsform von Figur 2a kann der Endabschnitt des Rohrs 10 in einer sogenannten offenen Variante ausgeführt sein, bei der kein metallischer Kontakt zwischen dem inneren Rohr 11 und dem äußeren Rohr 12 besteht. Entsprechend ist ein daran angrenzender Teil des Abgasstrangs in gleicher Weise auszubilden, so dass sich ein abdichtender Kontakt zwischen den jeweiligen Rohrstellen einstellt.

Gemäß einer in der Figur 2b gezeigten alternativen Ausführungsform ist das innere Rohr 11 an seinem Ende im Durchmesser vergrößert bzw. "aufgetulpt", wodurch ein Kontakt zwischen dem inneren Rohr 11 und dem äußeren Rohr 12 entsteht.

Bei der in Figur 2c gezeigten noch weiteren alternativen Ausführungsform ist das äußere Rohr 12 in seinem Durchmesser reduziert, so dass in gleicher Weise wie bei der Ausführungsform von Figur 2b ein Kontakt zwischen den beiden Rohren entsteht. In beiden Ausführungsformen von Figur 2b als auch Figur 2c kann zusätzlich noch ein Schweißpunkt an der Kontaktstelle der beiden Rohre gesetzt werden, um ein Verschieben der Rohrenden bedingt durch den Biegevorgang zu verhindern.

Nachstehend ist nochmals die rückstandsfreie Verbrennung des Zwischenstücks aus Kunststoff erläutert.

Im Betrieb der Verbrennungskraftmaschine erreicht die Temperatur des in dem inneren Rohr 11 geführten Abgases ohne weiteres einen Wert von 500°C und darüber, wobei zumindest das innere Rohr in etwa die gleiche Temperatur annimmt. Da das Zwischenstück aus Kunststoff, wie voranstehend erläutert, in Kontakt mit dem inneren Rohr ist, kommt es im Betrieb der Verbrennungskraftmaschine, wenn das innere Rohr von dem heißen Abgas durchströmt wird, zu einem Verbrennen des Kunststoffs, da die genannte Abgastemperatur wesentlich größer als die Zersetzungstemperatur des Kunststoffs ist. Im Falle eines Polyethylens wird der polymere Werkstoff in seine niedermolekularen Spaltprodukte überführt, d.h. Kohlenstoff und Wasserstoff. Diese niedermolekularen Spaltprodukte sind für einen Katalysator unbedenklich, so dass die Gase des verbrannten Kunststoffs wie voranstehend erläutert ohne weiteres zusammen mit dem regulären Abgasstrom durch das innere Rohr 11 und anschließend durch den (nicht gezeigten) Katalysator hindurch nach außen abgeführt werden können. In gleicher Weise eignen sich auch andere Kunststoffe, insbesondere thermoplastische Kunststoffe, die bei ihrer Verbrennung lediglich niedermolekulare Spaltprodukte freisetzen, die im Hinblick auf einen Katalysator oder dergleichen unbedenklich sind.

Das erfindungsgemäße Verfahren zur Herstellung eines gebogenen doppelwandigen Bauteils zeichnet sich dadurch aus, dass sich eine genau definierte Positionierung eines inneren Rohrs relativ zu einem äußeren Rohr in einfacher Weise durch einen Zwischenring, mehrere Zwischenringe, einer Spirale oder eine entsprechende Beschichtung des inneren Rohrs erzielen läßt, wobei diese(s) Zwischenstück(e) beim Biegen des Verbundes gebildet aus dem inneren Rohr und dem äußeren Rohr einen Rohreinfall oder dergleichen wirkungsvoll verhindert bzw. verhindern. Zweckmäßigerweise ist das Zwischenstück aus einem Kunststoff ausgeführt, so dass im Betrieb einer Verbrennungskraftmaschine keine gesonderten Maßnahmen zum Entfernen des Zwischenstücks zu treffen sind, da dieses infolge der hohen Abgastemperaturen rückstandsfrei verbrennt. Durch Vorsehen lediglich eines Ringes bzw. mehreren einzelnen Ringen oder einer Spirale ist vorteilhaft gewährleistet, dass lediglich eine geringe Materialmenge des Zwischenstücks zu verbrennen ist, wodurch der reguläre Abgasstrom, der innerhalb des inneren Rohrs geführt wird, nur geringfügig durch das durch die Verbrennung des Zwischenstücks entstehende Gas "angereichert" wird. Im übrigen stellt sich infolge der nur geringen Materialmenge eine sehr schnelle Verbrennung und damit eine zügige Entfernung des Zwischenstücks ein, wonach sich entsprechend schnell ein gewünschter durchgehender isolierender Luftspalt zwischen dem inneren Rohr und dem äußeren Rohr einstellt.

## Patentansprüche

1. Verfahren zur Herstellung eines gebogenen doppelwandigen Bauteils (10), insbesondere eines doppelwandigen Rohrs für eine Abgasanlage einer Verbrennungskraftmaschine, das ein inneres Rohr (11) und ein äußeres Rohr (12) umfaßt, wobei zwischen dem inneren Rohr und dem äußeren Rohr ein Zwischenraum (13) mit einem Abstand (d) vorgesehen ist, mit folgenden Schritten:
- Bereitstellen des inneren Rohrs (11) und des äußeren Rohrs (12),
- Bereitstellen zumindest eines Zwischenstücks (16), dessen Dicke im wesentlichen dem Abstand (d) entspricht und das entweder auf das innere Rohr (11) aufgebracht oder in das äußere Rohr (12) eingebracht wird,
- Zusammenbringen des inneren Rohrs (11) und des äußeren Rohrs (12) zu einem Verbund, wobei das Zwischenstück (16) nur einen Teil des Zwischenraums (13) zwischen dem inneren Rohr (11) und dem äußeren Rohr (12) in axialer Richtung (I) ausfüllt, und
- Biegen des Verbunds gebildet aus dem inneren Rohr und dem äußeren Rohr **dadurch gekennzeichnet, daß** das Zwischenstück (16) aus einem Kunststoff hergestellt ist, der bei seiner Verbrennung im wesentlichen nur in niedermolekulare Spaltprodukte überführt wird.

2. Verfahren nach Anspruch 1, bei dem das bereitgestellte Zwischenstück (16) derart ausgebildet ist, daß es bei Betrieb einer Verbrennungskraftmaschine durch den im inneren Rohr geführten Abgasstrom verbrannt wird.

3. Verfahren nach Anspruch 1, bei dem das Zwischenstück in Form eines Rings (16) ausgebildet ist.

4. Verfahren nach Anspruch 1, bei dem eine Mehrzahl von Zwischenstücken in Form von Ringen (16) entlang einer Längsachse des Bauteils (10) angeordnet ist.

5. Verfahren nach Anspruch 1, bei dem das Zwischenstück in Form einer Spirale (16') ausgebildet ist, die sich entlang einer Längsachse (I) des Bauteils erstreckt.

6. Verfahren nach Anspruch 1, des bei dem das Zwischenstück aus einer Beschichtung des bereits gefertigten inneren Rohrs (11) gebildet ist.

7. Verfahren nach Anspruch 1, bei dem der Kunststoff aus einem Polyethylen gebildet ist.

8. Verfahren nach einem der Ansprüche 1, bis 7, bei dem das Zwischenstück (16, 16') auf das innere Rohr (11) bzw. in das äußere Rohr (12) mit einem Passmaß aufgebracht bzw. eingebracht wird.

9. Verfahren nach einem der Ansprüche 1 bis 8, bei dem zumindest ein jeweiliges Ende des inneren Rohrs (11) und des äußeren Rohrs (12) zueinander den Abstand aufweisen.

10. Verfahren nach einem der Ansprüche 1 bis 8, bei dem das äußere Rohr (12) an zumindest einem seiner beiden Enden im Durchmesser reduziert wird, so dass das zumindest eine Ende des äußeren Rohrs (12) an dem inneren Rohr (11) anliegt.

11. Verfahren einem der Ansprüche 1 bis 8, bei dem das innere Rohr (11) an zumindest einem seiner beiden Enden im Durchmesser vergrößert wird, so dass das zumindest eine Ende des inneren Rohrs (11) an dem äußeren Rohr anliegt und das innere Rohr (11) in Bezug zu dem äußeren Rohr (12) aufgetulpt ist.

12. Verfahren nach Anspruch 10 oder Anspruch 11, bei dem im Bereich der Kontaktstelle zwischen dem inneren Rohr (11) und dem äußeren Rohr (12) zumindest eine Schweißverbindung vorgesehen wird.

13. Gebogenes doppelwandiges Bauteil (10), insbesondere ein doppelwandiges Rohr für eine Abgasanlage einer Verbrennungskraftmaschine, mit
- einem inneren Rohr (11) und einem äußeren Rohr (12), wobei zwischen dem inneren Rohr und dem äußeren Rohr ein Zwischenraum (13) mit einem Abstand (d) vorgesehen ist, und mit
- zumindest einem Zwischenstück (16), dessen Dicke im Wesentlichen dem Abstand (d) entspricht und das innerhalb des Zwischenraums (13) angeordnet ist,
wobei das Zwischenstück (16) nur einen Teil des Zwischenraums (13) zwischen dem inneren Rohr (11) und dem äußeren Rohr (12) in axialer Richtung (I) des Bauteils (10) ausfüllt, **dadurch gekennzeichnet daß** das Zwischenstück (16) aus Kunststoff hergestellt ist, der bei seiner Verbrennung in niedermolekulare Spaltprodukte überführt wird.

14. Bauteil nach Anspruch 13, bei dem das Zwischenstück (16) derart ausgebildet ist, dass es bei Betrieb einer Verbrennungskraftmaschine durch den im inneren Rohr geführten Abgasstrom verbrennt.

15. Verwendung des Bauteils nach Anspruch 13 oder Anspruch 14 in einer Abgasanlage einer Verbrennungskraftmaschine, wobei zumindest ein Ende des inneren Rohrs (11) mittels eines Schiebesitzes (18) mit einem daran angrenzenden Teil (17) der Abgasanlage verbunden ist.

## Claims

1. Method for producing a bent double-walled component (10), in particular a double-walled pipe for an exhaust system of an internal combustion engine, which comprises an inner pipe (11) and an outer pipe (12), with an intermediate space (13) being provided at a distance (d) between the inner pipe and the outer pipe, with the following steps:
- providing the inner pipe (11) and the outer pipe (12),
- providing at least one intermediate piece (16), the thickness of which essentially corresponds to the distance (d) and which is either placed onto the inner pipe (11) or is placed into the outer pipe (12),
- bringing together the inner pipe (11) and the outer pipe (12) to form a composite structure, the intermediate piece (16) only filling part of the intermediate space (13) between the inner pipe (11) and the outer pipe (12) in the axial direction (I), and
- bending the composite structure formed from the inner pipe and the outer pipe, **characterized in that** the intermediate piece (16) is produced from a plastic, the burning of which essentially only converts it into low-molecular cleavage products.

2. Method according to Claim 1, in which the intermediate piece (16) provided is designed in such a manner that it is burned during operation of an internal combustion engine by the exhaust gas flow guided in the inner pipe.

3. Method according to Claim 1, in which the intermediate piece is designed in the form of a ring (16).

4. Method according to Claim 1, in which a plurality of intermediate pieces in the form of rings (16) are arranged along a longitudinal axis of the component (10).

5. Method according to Claim 1, in which the intermediate piece is designed in the form of a spiral (16') which extends along a longitudinal axis (I) of the component.

6. Method according to Claim 1, in which the intermediate piece is formed from a coating of the inner pipe (11) which has already been manufactured.

7. Method according to Claim 1, in which the plastic is formed from a polyethylene.

8. Method according to one of Claims 1 to 7, in which the intermediate piece (16, 16') is placed onto the inner pipe (11) or is placed into the outer pipe (12) with a matching size.

9. Method according to one of Claims 1 to 8, in which at least one respective end of the inner pipe (11) and of the outer pipe (12) are at a distance from each other.

10. Method according to one of Claims 1 to 8, in which the outer pipe (12) is reduced in diameter at at least one of its two ends, so that the at least one end of the outer pipe (12) bears against the inner pipe (11).

11. Method according to one of Claims 1 to 8, in which the inner pipe (11) is increased in diameter at at least one of its two ends, so that the at least one end of the inner pipe (11) bears against the outer pipe and the inner pipe (11) is turned outward in a tulip-shaped manner with respect to the outer pipe (12).

12. Method according to Claim 10 or Claim 11, in which at least one welding connection is provided in the region of the contact point between the inner pipe (11) and the outer pipe (12).

13. Bent double-walled component (10), in particular a double-walled pipe for an exhaust system of an internal combustion engine, with
- an inner pipe (11) and an outer pipe (12), with an intermediate space (13) being provided at a distance (d) between the inner pipe and the outer pipe, and with
- at least one intermediate piece (16), the thickness of which essentially corresponds to the distance (d) and which is arranged within the intermediate space (13), the intermediate piece (16) only filling part of the intermediate space (13) between the inner pipe (11) and the outer pipe (12) in the axial direction (I) of the component (10), **characterized in that** the intermediate piece (16) is produced from plastic, the burning of which converts it into low-molecular cleavage products.

14. Component according to Claim 13, in which the intermediate piece (16) is designed in such a manner that it burns during operation of an internal combustion engine by the exhaust gas flow guided in the inner pipe.

15. Use of the component according to Claim 13 or Claim 14 in an exhaust system of an internal combustion engine, with at least one end of the inner pipe (11) being connected to an adjacent part (17) of the exhaust system by means of a sliding fit (18).

## Revendications

1. Procédé de fabrication d'un composant cintré à double paroi (10), notamment d'un tuyau à double paroi pour une installation de gaz d'échappement d'un moteur à combustion interne, qui comprend un tuyau interne (11) et un tuyau externe (12), un espace intermédiaire (13) d'espacement (d) étant prévu entre le tuyau interne et le tuyau externe, comprenant les étapes suivantes :
- fourniture du tuyau interne (11) et du tuyau externe (12),
- fourniture d'au moins une pièce intermédiaire (16), dont l'épaisseur correspond essentiellement à l'espacement (d) et qui est montée soit sur le tuyau interne (11) soit dans le tuyau externe (12),
- assemblage du tuyau interne (11) et du tuyau externe (12) pour former une unité assemblée, la pièce intermédiaire (16) ne remplissant qu'une partie de l'espace intermédiaire (13) entre le tuyau interne (11) et le tuyau externe (12) dans la direction axiale (I), et
- cintrage de l'unité assemblée constituée du tuyau interne et du tuyau externe, **caractérisé en ce que** la pièce intermédiaire (16) est fabriquée en un plastique qui, lors de sa combustion, n'est converti sensiblement qu'en produits de décomposition à faible poids moléculaire.

2. Procédé selon la revendication 1, dans lequel la pièce intermédiaire (16) fournie est réalisée de telle sorte qu'elle soit brûlée lors du fonctionnement d'un moteur à combustion interne par le courant de gaz d'échappement guidé dans le tuyau interne.

3. Procédé selon la revendication 1, dans lequel la pièce intermédiaire est réalisée sous forme de bague (16).

4. Procédé selon la revendication 1, dans lequel une pluralité de pièces intermédiaires en forme de bagues (16) sont disposées le long d'un axe longitudinal du composant (10).

5. Procédé selon la revendication 1, dans lequel la pièce intermédiaire est réalisée sous forme de spirale (16') qui s'étend le long d'un axe longitudinal (I) du composant.

6. Procédé selon la revendication 1, dans lequel la pièce intermédiaire est formée d'un revêtement du tuyau interne (11) déjà fabriqué.

7. Procédé selon la revendication 1, dans lequel le plastique est formé d'un polyéthylène.

8. Procédé selon l'une quelconque des revendications 1 à 7, dans lequel la pièce intermédiaire (16, 16 ') est montée sur le tuyau interne (11) ou dans le tuyau externe (12), avec une tolérance.

9. Procédé selon l'une quelconque des revendications 1 à 8, dans lequel au moins une extrémité du tuyau interne (11) et une extrémité du tuyau externe (12) présentent l'une par rapport à l'autre l'espacement.

10. Procédé selon l'une quelconque des revendications 1 à 8, dans lequel le tuyau externe (12) a un diamètre réduit au niveau d'au moins l'une de ses deux extrémités, de sorte que l'au moins une extrémité du tuyau externe (12) s'applique contre le tuyau interne (11).

11. Procédé selon l'une quelconque des revendications 1 à 8, dans lequel le tuyau interne (11) a un diamètre accru au niveau d'au moins l'une de ses deux extrémités, de sorte que l'au moins une extrémité du tuyau interne (11) s'applique contre le tuyau externe et que le tuyau interne (11) soit évasé par rapport au tuyau externe (12).

12. Procédé selon la revendication 10 ou selon la revendication 11, dans lequel, dans la région du point de contact entre le tuyau interne (11) et le tuyau externe (12), est prévue au moins une connexion soudée.

13. Composant cintré à double paroi (10), notamment tuyau à double paroi pour une installation de gaz d'échappement d'un moteur à combustion interne, qui comprend :
- un tuyau interne (11) et un tuyau externe (12), un espace intermédiaire (13) d'espacement (d) étant prévu entre le tuyau interne et le tuyau externe, et
- au moins une pièce intermédiaire (16), dont l'épaisseur correspond essentiellement à l'espacement (d) et qui est disposée à l'intérieur de l'espace intermédiaire (13), la pièce intermédiaire (16) ne remplissant qu'une partie de l'espace intermédiaire (13) entre le tuyau interne (11) et le tuyau externe (12) dans la direction axiale (I) du composant (10), **caractérisé en ce que** la pièce intermédiaire (16) est fabriquée en plastique qui, lors de sa combustion, est converti en produits de décomposition à faible poids moléculaire.

14. Composant selon la revendication 13, dans lequel la pièce intermédiaire (16) est réalisée de telle sorte qu'elle soit brûlée lors du fonctionnement d'un moteur à combustion interne par le courant de gaz d'échappement guidé dans le tuyau interne.

15. Utilisation du composant selon la revendication 13 ou selon la revendication 14 dans une installation de gaz d'échappement d'un moteur à combustion interne, dans laquelle au moins une extrémité du tuyau interne (11) est connectée à une partie adjacente (17) de l'installation de gaz d'échappement au moyen d'un siège coulissant (18).
